# EUROPÄISCHE PATENTSCHRIFT

(11) **EP 2 009 581 B1**
(45) Veröffentlichungstag und Bekanntmachung des Hinweises auf die Patenterteilung: **07.09.2011**
(21) Anmeldenummer: 07012535.6
(22) Anmeldetag: 26.06.2007
(51) Int. Cl.: G06K 19/07, H04L 29/06

(54) **Anordnung und Funkeinrichtung zur Informationsübertragung**
Assembly and radio device for transmitting information
Installation et transmetteur destinés à la transmission d'informations

(43) Veröffentlichungstag der Anmeldung: 31.12.2008
(73) Patentinhaber: SIEMENS AKTIENGESELLSCHAFT, 80333 München (DE)
(72) Erfinder: Fuchs, Nikolaus, Dr., 3021 Pressbaum (AT); Hagl, Peter, 1120 Wien (AT)

(56) Entgegenhaltungen:
- US-A1- 2006 219 776
- US-A1- 2006 290 491
- "Determining Passenger Occupancy and Seating Location" IP.COM JOURNAL, 17. August 2006 (2006-08-17), XP013115506 ISSN: 1533-0001
- PENTTILA K ET AL: "Use and interface definition of mobile RFID reader integrated in a smart phone" PROCEEDINGS OF THE NINTH INTERNATIONAL SYMPOSIUM ON CONSUMER ELECTRONICS (ISCE), 14. Juni 2005 (2005-06-14), Seiten 353-358, XP010832175 ISBN: 0-7803-8920-4

## Beschreibung

Die Erfindung betrifft eine Anordnung und eine aktiv operierende Funkeinrichtung zur Informationsübertragung, insbesondere zur Steuerung einer Übertragung von in passiv operierenden Funkeinrichtungen, wie beispielsweise so genannte RFID-oder NFC-Etiketten bzw. -Transponder, vorgehaltenen Daten.

Vorstehend genannte RFID- (Radio Frequency Identification) bzw. NFC- (Near Field Communication) Etiketten (engl. Tag) werden zunehmend in einer Vielzahl von Anwendungsgebieten eingesetzt. In Verbindung mit Lesegeräten und Infrastruktureinrichtungen, welche die in einer Vielzahl von derartigen Etiketten gespeicherten Daten zentral verarbeiten und verwalten, ist mittels der damit möglichen berührungslosen Identifikation beispielsweise eine effiziente Lagerverwaltung von mit derartigen Etiketten versehenen Produkten oder sonstiger Gegenstände realisierbar. Sie eignen sich insbesondere überall dort, wo eine schnelle Identifizierung von Gegenständen oder auch Lebewesen und die Übermittlung von Informationen über diese benötigt werden. Vorteilhaft gegenüber beispielsweise bekannten optischen Barkodes erfolgt die Informationsübertragung mittels Funkwellen, weshalb ein Sichtkontakt zwischen Etikett und Lesegerät keine Bedingung für die Informationsübertragung ist.

Wie unter anderem in der US 2006/0208899 A1 beschrieben, ist eine RFID-Etikette prinzipiell als eine integrierte Schaltung (engl. Integrated Circuit; IC) ausgeführt, bestehend aus einer Steuerschaltung, einer Antenne sowie einem Speicher. Die Antenne kann dabei aus einem als eine Spule ausgeführten Draht oder einer gleiche Eigenschaften aufweisende Leiterbahnstruktur bestehen, um elektromagnetische Wellen empfangen und aussenden zu können. Als Speicher kann ein nicht flüchtiger Speicher für vordefinierte Informationen, ein einmal beschreibbarer Speicher (engl. Read-Only Memory; ROM) oder ein schreib- und lesbarer Speicher wie beispielsweise ein EEPROM (Electrically Erasable Programmable Read-Only Memory) verwendet werden. Die Steuerschaltung führt vorgegebene Prozesse aus, beispielsweise die Kommunikation, den Speicherzugriff, eine Leistungskonvertierung etc. Die Steuerschaltung erhält Daten nach einer Demodulation von mittels der Antenne empfangenen Informationen. Auf Basis der empfangenen Daten generiert die Steuerschaltung Daten zur nachfolgenden Übertragung zu dem so genannten Lesegerät (engl. Reader), moduliert diese Sendedaten und überträgt die so erhaltenen Sendedaten über die Antenne zu dem Lesegerät. Weiterhin kann die Steuerschaltung auf Basis der empfangenen Daten Prozeduren durchführen, beispielsweise das Lesen oder Speichern von Daten von bzw. auf den Speicher.

Das Lesegerät dient wiederum als Schnittstelle der Infrastruktureinrichtungen für den Zugriff zum Lesen von sowie gegebenenfalls Schreiben von Daten auf den Speicher der Etiketten. Hierzu weist das Lesegerät in der Regel eine Antenne, die beispielsweise ebenfalls als eine aus einem Draht geformte Spule ausgeführt sein kann, sowie eine Steuerschaltung auf. Die Steuerschaltung führt dabei vordefinierte Prozeduren aus zur Generierung, Modulation und schließlich Übertragung von Daten über die Antenne zu der Etikette. Bei Empfang von Informationen von der Etikette demoduliert die Steuerschaltung diese entsprechend und verarbeitet die darin enthaltenen Daten bzw. gibt diese an nachgeschaltete Infrastruktureinrichtungen zur weiteren Verarbeitung weiter.

Bekannte RFID- bzw. NFC-Etiketten werden nach so genannten passiven und aktiven Etiketten unterschieden, wobei passiv bedeutet, dass sie keine eigene Energieversorgung aufweisen, währenddessen aktive Etiketten eine eigene Stromversorgung, typischerweise eine Batterie, aufweisen. Passive Etiketten werden daher zumeist mittels induktiver oder elektrodynamischer Kopplung mit Energie versorgt, um gewünschte Operationen wie das Aussenden von gespeicherten Daten auszuführen. Vorteilhaft können passive Etiketten sehr kostengünstig hergestellt werden, nachteilig können sie jedoch in der Regel nur eine begrenzte Anzahl Operationen ausführen und haben eine vergleichsweise geringe Reichweite der Funksignale. Aktive Etiketten hingegen sind von einer derartigen von außen kurzzeitig angelegten Energieversorgung unabhängig und können somit selbständig oder nach Aufforderung aktiv werden, beispielsweise zur Kommunikation mit passiven Etiketten. Sie weisen mithin einen größeren Funktionsumfang sowie eine höhere Sendeleistung und entsprechende Reichweite der Funksignale auf.

Am häufigsten finden aufgrund der preisgünstigeren Herstellung passive Etiketten Anwendung. Diese Etiketten sind in unterschiedlichen auf die jeweiligen Bedürfnisse des Anwenders angepassten Bauformen erhältlich, so beispielsweise als Ringe oder Armbänder für Zugangskontrollen, aber auch als Glaskapseln oder so genannte Smart Cards. Etiketten unterscheiden sich zudem hinsichtlich der verwendeten Frequenzbereiche, welche von Langwellen- bis in den Mikrowellenbereich reichen. Der verwendete Frequenzbereich bestimmt dabei eine Reichweite, typischerweise zwischen einigen Millimetern und mehreren zehn Metern, aber auch eine Lesegeschwindigkeit sowie eine Anfälligkeit gegenüber Übertragungen durch Flüssigkeiten und Festkörper, insbesondere Metall, die zur Absorption bzw. Reflektion der elektromagnetischen Wellen führen können.

Ein weiterhin präsentes und viel diskutiertes Problem beim Einsatz von RFID- bzw. NFC-Etiketten ist die Datensicherheit. Typischerweise können in Etiketten gespeicherte Daten ohne jegliche Schutzmechanismen, auch durch nicht autorisierte Dritte, transparent ausgelesen werden. Dies hat zur Folge, dass ein Nutzer dieser Etiketten in der Regel den Lesevorgang nicht wahrnehmen und auch nicht verhindern kann. Dies gilt insbesondere für den Fall, dass bei einem Lesevorgang einer bestimmten Etikette auch eine Mehrzahl in der Nähe befindlicher anderer Etiketten angesprochen werden und entsprechend ihre gespeicherten Daten an das Lesegerät übertragen, oder dass beliebige Lesegeräte die Daten bei der Übertragung abhören.

Mehrere Möglichkeiten zum Verhindern des unerlaubten Zugriffs auf in Etiketten gespeicherte Daten sind bekannt. So kann zum einen eine Verschlüsselung der zu übertragenden Daten durchgeführt werden, die es nur einem speziell eingerichteten Lesegerät in Kenntnis des verwendeten Schlüssels ermöglicht, diese zu entschlüsseln. Derartige Verschlüsselungsverfahren verwenden beispielsweise einen Passwortschutz, ein so genanntes Hash-Lock-Verfahren oder Challenge-Response-Verfahren. Nachteilig ist bei einer Vielzahl von Etiketten mit jeweils unterschiedlicher proprietärer Verschlüsselungstechnik, d.h. solange keine einheitlichen, gegebenenfalls standardisierte Verschlüsselungsverfahren eingesetzt werden, auch eine Vielzahl entsprechend angepasster Lesegeräte erforderlich. Zum anderen kann ein unberechtigter Zugriff durch Verhinderung der Energiezufuhr zu den Etiketten erreicht werden, beispielsweise durch Entfernen der Batterie der Etikette oder Aufbewahrung in einem als Faradayscher Käfig wirkenden Behältnis. Hierdurch ist jedoch nicht in jedem Fall ein Verhindern des Zugriffs möglich, beispielsweise wenn mittels eines sehr starken Feldes und eines sehr empfindlichen Empfängers zugegriffen wird. Auch wird dadurch der berechtigte Zugriff gleichermaßen wie der unberechtigte unterbunden.

Aus dem Dokument US 2006/0219776 A1 ist ferner bekannt, zur Weitergabe vorgehaltener Daten vor einer Übertragung der Daten an eine weitere Einrichtung den Empfang einer Autorisierung seitens eines Benutzers zur Bedingung zu machen. Bei der Weitergabe der vorgehaltenen Daten selbst kommt es zwischen einer passiv und einer aktiv operierenden Funkeinrichtung zu einer Nahfeldübertragung, die gegen ein Abhören durch Dritte nicht mit Sicherheit geschützt ist.

Aufgabe der Erfindung ist es, eine Anordnung und eine aktiv operierende Funkeinrichtung anzugeben, die eine sichere Übertragung von Informationen bei gleichzeitiger Wahrung des Datenschutzes ermöglichen. Diese Aufgabe wird durch die Merkmale der unabhängigen Patentansprüche gelöst. Vorteilhafte Weiterbildungen sind in abhängigen Patentansprüchen angegeben.

Die erfindungsgemäße Anordnung zur Datenübertragung weist zum einen ein geschlossenes Behältnis, zum anderen zumindest eine aktiv operierende Funkeinrichtung auf, wobei die aktiv operierende Funkeinrichtung zumindest teilweise an einer Außenseite des Behältnisses angeordnet ist und ausgestaltet ist zur Funkkommunikation mit zumindest einer in dem Behältnis angeordneten passiv operierenden Funkeinrichtung, zur Kommunikation mit zumindest einer außerhalb des geschlossenen Behältnisses angeordneten weiteren Einrichtung sowie zur Steuerung einer Übertragung von in der zumindest einen passiv operierenden Funkeinrichtung vorgehaltenen Daten zu der zumindest einen weiteren Einrichtung, wobei die zumindest eine aktiv operierende Funkeinrichtung (AFE) ausgestaltet ist zur Aussendung von Überlagerungssignalen in der Weise, dass entweder durch zumindest eine der passiv operierenden Funkeinrichtung (PFE) ein Empfang von von einer weiteren Einrichtung (z.B. SLG) kommenden Signalen oder durch eine weitere Einrichtung (z.B. SLG) ein Empfang von von zumindest einer passiv operierenden Funkeinrichtung (PFE) ausgesendeten Signalen verhindert ist, ohne jeweils den Empfang dieser jeweiligen kommenden beziehungsweise ausgesendeten Signale durch die zumindest eine aktiv operierende Funkeinrichtung (AFE) weitgehend zu stören.

Vorteilhafte Ausgestaltungen der erfinderischen Anordnung sind Gegenstand von Unteransprüchen.

Sowohl die aktiv als auch die passiv operierende Funkeinrichtung können nach den einleitend genannten Beispielen als RFID- bzw. NFC-Etiketten ausgeführt sein. Als weitere Einrichtung sei hingegen eine Komponente der die Daten aufnehmenden und verarbeitenden Infrastruktur angenommen, beispielsweise ein bekanntes Lesegerät bzw. Schreib-/Lesegerät. Die erfindungsgemäße Verschlüsselung der Daten erfolgt beispielsweise gemäß bekannten Verschlüsselungsverfahren, beispielsweise unter Verwendung von privaten und/oder öffentlichen Schlüsseln. Vorzugsweise erfolgt die Verschlüsselung zwischen der zumindest einen aktiv operierenden Funkeinrichtung und der zumindest einen passiv operierenden Funkeinrichtung unabhängig von einer gegebenenfalls ergänzend realisierten Verschlüsselung der Datenübertragung zwischen der zumindest einen aktiv operierenden Funkeinrichtung und der zumindest einen weiteren Einrichtung. Beispielsweise für den Fall, dass die weitere Einrichtung ein bekanntes Lesegerät bzw. Schreib-/Lesegerät ist, ist hierdurch vorteilhaft sichergestellt, dass keine direkte Kommunikation zwischen der zumindest einen passiv operierenden Funkeinrichtung in dem geschlossenen Behältnis und der weiteren Einrichtung möglich ist. Als zentrale Schnittstelle zwischen passiv operierender Funkeinrichtung und weiterer Einrichtung agiert somit allein die aktiv operierende Funkeinrichtung, wobei diese vorteilhaft zudem eine gegenüber passiv operierenden Funkeinrichtungen größere Reichweite erzielt und somit einen sicheren Empfang an der weiteren Einrichtung ermöglicht.

Ein direkter Zugriff auf die zumindest eine passiv operierende Funkeinrichtung seitens der weiteren Einrichtung kann ergänzend mittels einer speziellen Ausgestaltung des Behältnisses verhindert werden, wie nachfolgend weiter ausgeführt wird. Auch führt die Tatsache, dass eine Datenübertragung innerhalb des Behältnisses aufgrund in der Regel geringer Distanzen nur mit einer vergleichsweise geringen Sendeleistung erfolgen muss, zu einer Verschlechterung der Empfangbarkeit von Datenübertragungen der passiv operierenden Funkeinrichtungen außerhalb des Behältnisses, wodurch ein Abhören der Daten vorteilhaft weitgehend verhindert werden kann. Vorteilhaft kann durch den geringeren Energieaufwand für die Datenübertragung durch die passiv operierenden Funkeinrichtungen weiterhin Energie zum Durchführen weiterer bzw. komplexerer Operationen, wie beispielsweise eine aufwändigere Verschlüsselung, verwendet oder auch eine kostengünstigere Herstellung ermöglicht werden.

Vorzugsweise erfolgt die Verschlüsselung der Datenübertragung zwischen den Funkeinrichtungen einheitlich, d.h. es wird ein einheitliches Verschlüsselungsverfahren eingesetzt. Sofern dies aufgrund einer unterschiedlichen Ausgestaltung bzw. Konfiguration der passiv operierenden Funkeinrichtungen nicht möglich ist, werden vorteilhaft in der aktiv operierenden Funkeinrichtung die von den passiv operierenden Funkeinrichtungen unterstützten Verschlüsselungsverfahren implementiert. Die aktiv operierende Funkeinrichtung übernimmt somit prinzipiell die Funktionalität eines auf die passiv operierenden Funkeinrichtungen individuell abgestimmten Lesegerätes. Auf der Schnittstelle zwischen der aktiv operierenden Funkeinrichtung und der weiteren Einrichtung wird hingegen vorzugsweise ein einziges Verschlüsselungsverfahren eingesetzt, sodass unabhängig von der Datenquelle, d.h. der passiv operierenden Funkeinrichtung, eine gesicherte und einheitliche Weitergabe von Daten an die weitere Einrichtung erfolgt.

Ein einheitliches Verschlüsselungsverfahren kann dabei zudem proprietär gewählt werden, um eine Kommunikation zwischen passiv und aktiv operierenden Funkeinrichtungen beispielsweise eines bestimmten Herstellers vor unberechtigten Zugriff zu schützen, währenddessen eine Kommunikation mit passiv operierenden Funkeinrichtungen eines anderen Herstellers nicht verschlüsselt erfolgt.

Gemäß einer Weiterbildung der erfindungsgemäßen Anordnung ist die aktiv operierende Funkeinrichtung ausgestaltet zur funk-oder leitungsbasierten Übertragung der Daten der zumindest einen passiv operierenden Funkeinrichtung zu der weiteren Einrichtung. Insbesondere bei einer leitungsbasierten Übertragung kann dabei ein unberechtigtes Abhören der Daten wirksam unterbunden werden, sodass gegebenenfalls ein Einsatz eines Verschlüsselungsverfahrens auf der Schnittstelle zwischen aktiv operierender Funkeinrichtung und weiterer Einrichtung nicht erforderlich ist.

Einer darauf basierenden weiteren Weiterbildung zufolge setzt die aktiv operierende Funkeinrichtung für den funkbasierten Austausch von Informationen mit der zumindest einen passiven Funkeinrichtung und der zumindest einen weiteren Einrichtung gleiche oder unterschiedliche Kommunikationsprotokolle ein. Derartige Kommunikationsprotokolle können beispielsweise in Standardisierungsgremien festgelegte Protokolle und Systemkonfigurationen sein. So kann bei Verwendung unterschiedlicher Protokolle die aktiv operierende Funkeinrichtung auf der Funkschnittstelle zu der zumindest einen passiv operierenden Funkeinrichtung einen RFID- bzw. NFC-Standard unterstützen, währenddessen die Übertragung auf einer Funkschnittstelle zu der weiteren Einrichtung beispielsweise gemäß einem bekannten Funkkommunikationsstandard wie GSM (Global System for Mobile Communication), UMTS (Universal Mobile Telecommunications System), WiMAX (Worldwide Interoperability for Microwave Access) oder WLAN (Wireless Local Area Network; IEEE 802.11) erfolgt. Die aktiv operierende Funkeinrichtung ist in diesem Fall zum Umsetzen von Protokollen ausgestaltet, wobei sie vorteilhaft auch von einem älteren Protokoll, welches von einem älteren Typ einer passiv operierenden Funkeinrichtung unterstützt wird, auf ein aktuelles Protokoll der weiteren Einrichtung übersetzen kann, um eine Inkompatibilität bei der Weitergabe der Daten an die weitere Einrichtung zu vermeiden.

Gemäß einer weiteren Ausgestaltung der Erfindung erfolgt eine Übertragung der Daten an die zumindest eine weitere Einrichtung durch die zumindest eine aktiv operierende Funkeinrichtung erst nach Bestätigung durch einen Nutzer. Der Nutzer der Anordnung ist somit in der Lage, eine Weitergabe von in passiv operierenden Funkeinrichtungen vorgehaltenen Daten zu autorisieren, wodurch vorteilhaft eine unbeabsichtigte Weitergabe von Daten verhindert werden kann. Auch kann der Nutzer beispielsweise von der aktiv operierenden Funkeinrichtung, beispielsweise mittels einer optischen und/oder akustischen Ausgabe eines Hinweises, darüber informiert werden, dass ein Zugriffsversuch eines Lesegerätes detektiert wurde, und diesen entsprechend situationsabhängig vollständig oder beschränkt autorisieren oder auch verhindern. Dies kann von dem Nutzer beispielsweise mittels manueller Betätigung einer oder mehrerer Tasten zur Auswahl einer oder mehrerer passiv operierender Funkeinrichtungen bzw. einer Eingabe einer PIN-Nummer an einer Eingabeeinheit, beispielsweise eine an der aktiv operierenden Funkeinrichtung verwirklichten oder mit dieser verbundenen numerischen Tastatur, erfolgen. Die aktiv operierende Funkeinrichtung wirkt in diesem Fall wie ein aus der Kommunikationstechnik bekanntes Gateway bzw. eine so genannte Firewall.

Vorteilhaft kann neben einer nutzergesteuerten Filterung der Datenübertragung zu der weiteren Einrichtung auch eine Bündelung der Daten von mehreren passiv operierenden Funkeinrichtungen in dem Behältnis durch die aktiv operierende Funkeinrichtung durchgeführt werden. Bündelung bedeutet dabei, dass die aktiv operierende Funkeinrichtung nach einer Trennung der von den mehreren passiv operierenden Funkeinrichtungen empfangenen Daten und einer gegebenenfalls ergänzenden Filterung die Daten strukturiert, d.h. beispielsweise in serielle oder parallele Datenströme aufgeteilt, zu der weiteren Einrichtung überträgt. Hierdurch ist seitens der weiteren Einrichtung keine Trennung von zufallsgesteuerten mehreren Übertragungen von passiv operierenden Funkeinrichtungen erforderlich, wodurch vorteilhaft die Empfangssicherheit am Ort der weiteren Einrichtung durch Vermeidung von Übertragungsfehlern und Kollisionen erhöht wird.

Einer weiteren Ausgestaltung der Erfindung zufolge ist die zumindest eine aktiv operierende Funkeinrichtung ausgestaltet zur Funkeinrichtungs-individuellen oder Funkeinrichtungsgruppen-individuellen Adressierung von passiv operierenden Funkeinrichtung. Die aktiv operierende Einrichtung hat hierdurch vorteilhaft die Möglichkeit, bestimmte passiv operierende Funkeinrichtungen zu adressieren, um beispielsweise eine Übertragung von speziell in diesen vorgehaltenen Daten zu initiieren. Hierzu sind bereits eine Vielzahl so genannter Zugriffsverfahren bekannt, wobei eine Trennung der verschiedenen Funkeinrichtungen bzw. Gruppen von Funkeinrichtungen beispielsweise räumlich (Space Diversity Multiple Access; SDMA), nach der Zeit (Time Division Multiple Access; TDMA), nach der Frequenz (Frequency Division Multiple Access, FDMA) oder auch nach Kodes (Code Division Multiple Access; CDMA) erfolgt, wobei auch Kombinationen dieser Separierungsverfahren eingesetzt werden können.

Gemäß einer weiteren Weiterbildung der Erfindung ist die zumindest eine aktiv operierende Einrichtung ferner ausgestaltet zum Empfangen von Daten von der zumindest einen weiteren Einrichtung. Der Empfang von Daten oder beispielsweise auch Steuerinformationen kann dabei vorteilhaft dazu verwendet werden, die aktiv operierende Funkeinrichtung sowie ergänzend gegebenenfalls auch die passiv operierende Funkeinrichtung zu konfigurieren bzw. seitens der weiteren Einrichtung zu veranlassen, bestimmte Operationen oder eine Speicherung bestimmter von der weiteren Einrichtung übertragener Daten auszuführen. Dies kann gegebenenfalls wiederum erst nach einer Autorisierung durch den Nutzer entsprechend vorstehender Beschreibung erfolgen, um unerwünschte Zugriffe auf und Aktivitäten der Funkeinrichtungen zu verhindern.

Gemäß einer weiteren Weiterbildung weist die aktiv operierende Funkeinrichtung eine gleiche oder unterschiedliche Antenneneinrichtungen für die Kommunikation mit der zumindest einen passiven Funkeinrichtung und der zumindest einen weiteren Einrichtung auf. Zur Verbesserung der Übertragungsqualität jeweils zu der weiteren Einrichtung sowie der zumindest einen passiv operierenden Funkeinrichtung kann es dabei sinnvoll sein, eine Antenneneinrichtung an der Außenseite bzw. außerhalb des geschlossenen Behältnisses vorzusehen, um eine Dämpfung der Funksignale oder sonstige negative Beeinflussung der Datenübertragung zu der weiteren Einrichtung weitgehend zu verhindern, und eine Antenneneinrichtung an der Innenseite des Behältnisses vorzusehen, um innerhalb des Behältnisses eine störungsfreie Datenübertragung bei gleichzeitig niedriger erforderlicher Sendeleistung zu gewährleisten.

Einer weiteren Ausgestaltung der Erfindung zufolge besteht das Behältnis aus einem starren und/oder flexiblen Material. Es kann dabei jede denkbare Gestalt annehmen, beispielhaft sei nur die Ausführung als eine Art Brieftasche genannt, an dessen Außenseite Teile, beispielsweise eine Antenne sowie Ein- und Ausgabeeinrichtungen zur Kommunikation mit der weiteren Einrichtung sowie dem Nutzer, der aktiv operierenden Funkeinrichtung und in dessen Inneren passiv operierende Funkeinrichtungen beispielsweise in Form von Smartcards angeordnet sind. Vorzugsweise wirken die Materialien des Behältnisses elektromagnetisch dämpfend bzw. abschirmend, um eine direkte Datenübertragung zwischen passiv operierenden Funkeinrichtungen und einer weiteren Einrichtung, wie beispielsweise einem Lesegerät bzw. Schreib-/Lesegerät, weitgehend zu verhindern.

Die abschirmende Wirkung des Behältnisses wird gemäß der Erfindung vorteilhaft durch eine aktive Überlagerung mit elektromagnetischen Signalen verstärkt. Dabei sendet die Antenneneinrichtung der aktiv operierenden Funkeinrichtung an der Innenseite des Behältnisses ein elektromagnetisches Signal in den Innenraum des Behältnisses, um durch Überlagerung zumindest eine der passiv operierenden Funkeinrichtung einen Empfang von von einer weiteren Einrichtung, beispielsweise einem externen Lesegerät, kommenden und bereits mittels der Abschirmung geschwächten Signalen zu verhindern. Die Intensität des Überlagerungssignals wird dabei vorzugsweise so bemessen, dass das Signal der weiteren Einrichtung von der Antenneneinrichtung an der Außenseite des Behältnisses noch weitgehend ungestört empfangen werden kann.

Alternativ oder ergänzend kann die Antenneneinrichtung an der Außenseite des Behältnisses ein Überlagerungssignal in Richtung der weiteren Einrichtung aussenden, um dieser einen direkten Empfang von von der zumindest einen passiv operierenden Funkeinrichtung in dem Behältnis ausgesendeten Signalen zu verwehren. Die Intensität des Überlagerungssignals wird dabei vorzugsweise so bemessen, dass die Signale der zumindest einen passiv operierenden Funkeinrichtung von der an der Innenseite des Behältnisses angeordneten Antenneneinrichtung noch weitgehend ungestört empfangen werden kann.

Eine erfindungsgemäße aktiv operierende Funkeinrichtung zur zumindest teilweisen Anordnung an einer Außenseite eines geschlossenen Behältnisses weist entsprechend vorstehenden Ausführungen zumindest Mittel zur Funkkommunikation mit zumindest einer in dem Behältnis angeordneten passiv operierenden Funkeinrichtung, zur Kommunikation mit zumindest einer außerhalb des Gehäuses angeordneten weiteren Einrichtung sowie zur Steuerung einer Übertragung von in der zumindest einen passiv operierenden Funkeinrichtung vorgehaltenen Daten zu der zumindest einen weiteren Einrichtung auf, wobei Mittel vorgesehen sind zur Aussendung von Überlagerungssignalen, durch die entweder durch zumindest eine der passiv operierenden Funkeinrichtung (PFE) ein Empfang von von einer weiteren Einrichtung (z.B. SLG) kommenden Signalen oder durch eine weitere Einrichtung (z.B. SLG) ein Empfang von von zumindest einer passiv operierenden Funkeinrichtung (PFE) ausgesendeten Signalen verhindert ist, ohne jeweils den Empfang dieser jeweiligen kommenden beziehungsweise ausgesendeten Signale durch die aktiv operierende Funkeinrichtung (AFE) weitgehend zu stören.

Vorteilhafte Ausgestaltungen der erfindungsgemäßen aktiven Funkeinrichtung sind Gegenstand von Unteransprüchen.

Ergänzend weist die Funkeinrichtung gemäß einer Weiterbildung Mittel bzw. eine Schnittstelle zu derartigen Mitteln auf, mittels derer Informationen gegenüber dem Nutzer ausgegeben bzw. von diesem empfangen werden können. Dies kann beispielsweise mittels bekannter Einrichtungen einer so genannten Mensch-Maschine-Schnittstelle (engl. Man Machine Interface; MMI), wie Tastatur, Bildschirm, Lautsprecher etc., erfolgen.

Nachfolgend wird die Erfindung anhand eines Ausführungsbeispiels näher erläutert. Dabei zeigen
- FIG 1: eine Außenansicht eines Mobiltelefons, und
- FIG 2: eine schematische Innenansicht des Mobiltelefons der FIG 1 mit darin angeordneten erfindungsgemäßen Einrichtungen sowie eine Innenansicht eines Schreib-/Lesegerätes mit darin angeordneten Einrichtungen.

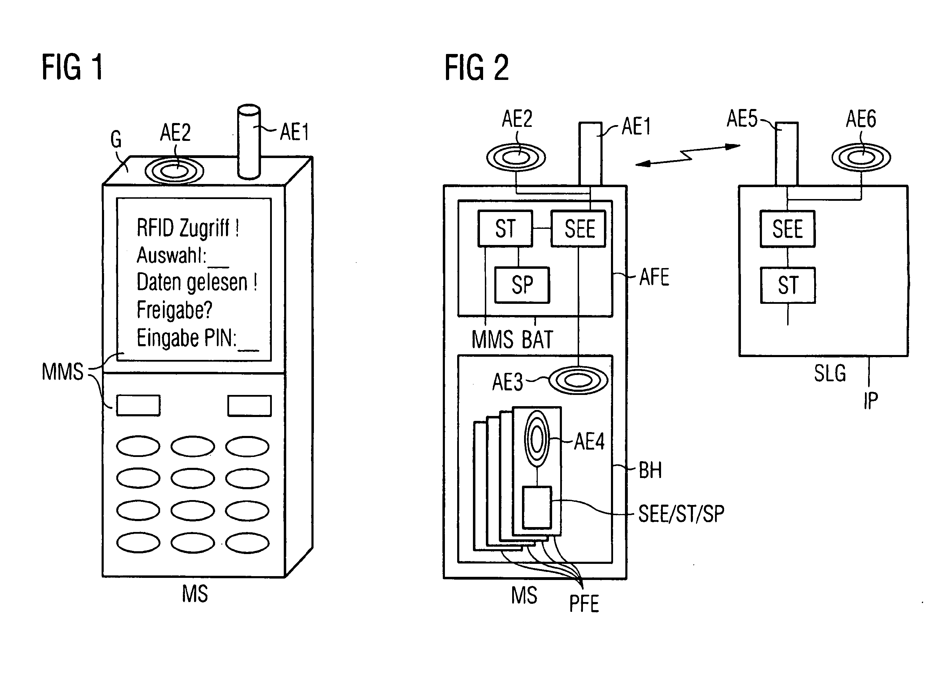

FIG 1 zeigt die Außen- bzw. Frontansicht eines so genannten Mobiltelefons MS (engl. Mobile Station) als Beispiel für eine Einrichtung, in der die erfindungsgemäße Anordnung bzw. aktiv operierende Funkeinrichtung verwirklicht werden kann. Mobiltelefone sind in unterschiedlichsten Ausprägungen bekannt und werden vorwiegend von Nutzern für Telefonate, aber auch für Datendienste oder Verwaltung von Terminen verwendet. Bekannte Mobilfunkstandards, nach denen Mobiltelefone arbeiten sind beispielsweise GSM (Global System for Mobile Communication) oder UMTS (Universal Mobile Telecommunication System). Das in FIG 1 dargestellte Mobiltelefon MS weist unter anderem ein Gehäuse G auf, welches beispielsweise aus Kunststoff hergestellt ist. An der Vorderseite des Mobiltelefons sind beispielhaft eine alphanumerische Tastatur, so genannte Funktionstasten sowie ein Bildschirm vorgesehen, die zusammen als Mensch-Maschine-Schnittstelle MMS (engl. Man Machine Interface; MMI) zur Ein- und Ausgaben von Daten und Befehlen gegenüber einem Nutzer des Mobiltelefons MS dienen. Weiterhin sind an dem Gehäuse beispielhaft zwei Antenneneinrichtungen AE1, AE2 vorgesehen, welche dem Senden und Empfangen von Funksignalen dienen. Die Antenneneinrichtungen können dabei, wie dargestellt, an der Außenseite des Gehäuses G angebracht sein, eine Anordnung innerhalb des Gehäuses und damit unsichtbar für den Nutzer ist jedoch in gleicher Weise möglich und in vielfältiger Form von aktuellen Mobiltelefonen bereits bekannt.

In FIG 2 ist auf der linken Seite eine schematische Innenansicht des Mobiltelefons MS der FIG 1 dargestellt, wobei lediglich die erfindungsrelevanten Einrichtungen bzw. Mittel dargestellt sind. Alle weiteren Einrichtungen des Mobiltelefons MS zur Erfüllung der oben genannten Funktionen sind dem Fachmann hinlänglich bekannt und daher nicht in FIG 2 dargestellt.

Die erfindungsgemäße Anordnung in dem Mobiltelefon MS besteht aus einer aktiv operierenden Funkeinrichtung AFE, einem geschlossenen Behältnis BH sowie einer in dem geschlossenen Behältnis BH angeordneten Mehrzahl passiv operierender Funkeinrichtungen PFE.

Das geschlossene Behältnis BH ist dabei beispielsweise ebenfalls als ein Gehäuse aus Kunststoff verwirklicht, wobei dies nach bekannten Verfahren vorzugsweise elektromagnetisch, d.h. gegen das Eindringen von Funkwellen, abgeschirmt wird. Beispielhaft sei der Einschluss eines Gewirkes aus Draht oder elektrisch leitendem Kunststoff bei Herstellung des Behältnisses genannt, um die Wirkung eines Faraday'schen Käfigs zu erzielen. Das Gehäuse nimmt eine bestimmte maximale Anzahl von passiv operierenden Funkeinrichtungen PFE auf. Vorzugsweise ist das Behältnis von der Außenseite des Gehäuses G des Mobiltelefons MS für den Nutzer des Mobiltelefons MS zugänglich, um eine einfache Ergänzung bzw. einen Austausch von passiv operierenden Funkeinrichtungen PFE zu ermöglichen. Alternativ zu einer Ausgestaltung als eigenständiges Gehäuse innerhalb des Gehäuses G des Mobiltelefons MS kann auch das Gehäuse G des Mobiltelefons MS bzw. ein bestimmter Teil des Gehäuses G selbst als das Behältnis BH mit den erfindungsgemäßen Eigenschaften ausgestaltet sein. Hierbei muss jedoch darauf geachtet werden, dass zumindest die für die Kommunikation mit Einrichtungen außerhalb des Mobiltelefons, beispielsweise ein Schreib-/Lesegerät LSG oder eine Basisstation (engl. Base Station, BS) des Mobilfunksystems, verwendeten Antenneneinrichtungen AE1, AE2 außerhalb des Behältnisses angeordnet sind, um eine Schwächung von Funksignalen aufgrund der Dämpfungseigenschaften des Behältnisses zu vermeiden.

Die passiv operierenden Funkeinrichtungen PFE sind nach einleitender Beschreibung beispielsweise als passive RFID- (Radio Frequency Identification) bzw. NFC- (Near Field Communication) Etiketten ausgeführt, wobei diese vorzugsweise jeweils identische Abmessungen aufweisen, beispielsweise die Abmessungen einer bekannten Smartcard bzw. Kreditkarte, bzw. auf einer derartigen Karte aufgebracht oder in dieser integriert sind, um eine Verwahrung einer Vielzahl von solchen Karten in dem Behältnis BH zu vereinfachen. Eine passiv operierende Funkeinrichtung PFE umfasst, wie einleitend bereits erläutert, zumindest jeweils eine Sende-/Empfangseinrichtung SEE, mittels derer Daten über eine Antenneneinrichtung AE4 gesendet und empfangen werden können, eine Steuereinrichtung ST sowie eine Speichereinrichtung SP. In der Speichereinrichtung SP vorgehaltene Daten werden mittels der Antenneneinrichtung AE4, die beispielsweise als eine Spule aus elektrisch leitendem Draht bzw. eine Leiterbahnstruktur mit entsprechender Form ausgeführt ist, in Form von elektromagnetischen Wellen ausgesendet, nachdem zuvor über die Antenneneinrichtung AE4 elektromagnetisch Energie induziert wurde. Als Speichereinrichtung SP wird beispielsweise ein nicht flüchtiger Speicher für vordefinierte Informationen, ein einmal beschreibbarer Speicher oder ein schreib- und lesbarer Speicher verwendet. Die Steuereinrichtung ST führt vorgegebene Prozesse aus, beispielsweise die Kommunikation, den Speicherzugriff, eine Leistungs- und Protokollkonvertierung etc. Die Steuereinrichtung ST erhält Daten nach einer Demodulation von mittels der Antenneneinrichtung AE4 und der Sende-/Empfangseinrichtung SEE empfangenen Informationen. Auf Basis der empfangenen Daten generiert die Steuereinrichtung ST Daten zur nachfolgenden Übertragung bzw. liest in der Speichereinrichtung SP vorgehaltene Daten aus, moduliert diese Daten und überträgt die so erhaltenen Sendedaten mittels der Sende-/Empfangseinrichtung SEE über die Antenneneinrichtung AE4 zu einer empfangenden Antenneneinrichtung. Weiterhin kann die Steuereinrichtung ST auf Basis der empfangenen Informationen bzw. Daten Prozeduren durchführen, beispielsweise das Lesen oder Speichern von Daten von bzw. auf der Speichereinrichtung SP.

Anstelle einer bekannten direkten Kommunikation mit einem Schreib-/Lesegerät SLG, wie es auf der rechten Seite der FIG 2 beispielhaft schematisch dargestellt ist, kommunizieren die passiv operierenden Funkeinrichtungen PFE in dem Behältnis BH mit der in dem Mobiltelefon MS angeordneten aktiv operierenden Funkeinrichtung AFE. Dies erfolgt beispielhaft über eine innerhalb des Behältnisses BH angeordnete Antenneneinrichtung AE3 der aktiv operierenden Funkeinrichtung AFE. Die Antenneneinrichtung AE3 hat dabei vorzugsweise eine identische oder ähnliche Form wie die Antenneneinrichtungen AE4 der passiv operierenden Funkeinrichtungen PFE, um einen möglichst optimalen Energiefluss bzw. eine möglichst optimale Datenübertragung zwischen den Funkeinrichtungen AFE, PFE zu erzielen. Alternativ kann die Antenneneinrichtung AE3 der aktiv operierenden Funkeinrichtung AFE auch als Teil dieser Funkeinrichtung AFE selbst realisiert sein, insbesondere wenn das Gehäuse G des Mobiltelefons MS selbst die Funktionalität eines geschlossenen Behältnisses BH zur Aufnahme von passiv operierenden Funkeinrichtungen PFE übernimmt.

Die aktiv operierende Funkeinrichtung AFE in dem Mobiltelefon MS ist beispielsweise als eine speziell konfigurierte aktive RFID- bzw. NFC-Etikette ausgestaltet. Entsprechend weist sie bekannte Einrichtungen wie eine Sende-/Empfangseinrichtung SEE, eine Steuereinrichtung ST sowie zumindest eine Speichereinrichtung SP auf. Über Schnittstellen ist sie zudem mit beispielsweise der Stromversorgung bzw. Batterie BAT des Mobiltelefons MS, Einrichtungen des Mobiltelefons MS für die Realisierung einer Mensch-Maschine-Schnittstelle MMS (engl. Man Machine Interface; MMI) zur Ein- und Ausgaben von Daten und Befehlen gegenüber einem Nutzer des Mobiltelefons MS entsprechend FIG 1, sowie Antenneneinrichtungen AE1, AE2, AE3 verbunden. Weitere Schnittstellen zu Einrichtungen des Mobiltelefons MS, welche in die Funktion der aktiv operierenden Funkeinrichtung AFE eingebunden werden können, sind denkbar.

Die Sende-/Empfangseinrichtung SEE generiert zum einen Signale zur Übertragung zu den passiv operierenden Funkeinrichtungen PFE in dem Behältnis BH über die in diesem angeordnete Antenneneinrichtung AE3 bzw. dient der Induzierung von Energie über die Antenneneinrichtung AE3, zum anderen empfängt und bereitet sie empfangene Signale bzw. Informationen der passiv operierenden Funkeinrichtungen PFE auf. Weiterhin ist die Sende-/Empfangseinrichtung SEE derart ausgestaltet, dass sie die zu dem Schreib-/Lesegerät SLG zu übertragenden Daten zur funk- oder auch leitungsgebundenen Übertragung aufbereitet. Eine leitungsgebundene Übertragung kann beispielsweise über eine bekannte (nicht dargestellte) Schnittstelle des Mobiltelefons MS erfolgen, mittels der auch andere mobiltelefonspezifische Daten beispielsweise mit einem Computer ausgetauscht werden. Beispielhaft sei die in Fachkreisen bekannte USB-Schnittstelle (Universal Serial Bus) genannt. Vorzugsweise erfolgt eine Datenübertragung jedoch unter Nutzung einer der beiden beispielhaft angegebenen Antenneneinrichtungen AE1, AE2, wobei dies abhängig von der unterstützten Funkschnittstelle des Schreib-/Lesegerätes SLG geschieht. Entsprechend sind auch an dem in FIG 2 dargestellten Schreib-/Lesegerät SLG beispielhaft zwei Antenneneinrichtungen AE5, AE6 vorgesehen. Sowohl die Datenübertragung von/zu passiv operierenden Funkeinrichtungen PFE als auch von/zu dem Schreib-/Lesegerät SLG kann dabei gleichzeit erfolgen.

In der Regel wird das Schreib-/Lesegerät SLG jedoch lediglich ein RFID- bzw. NFC-Kommunikationsprotokoll bzw. einen dieses definierenden Kommunikationsstandard unterstützen und entsprechend für die Kommunikation mit dem Mobiltelefon MS eine speziell dafür ausgestaltete Antenneneinrichtung AE6 verwenden. In diesem Fall ist seitens der Sende-/Empfangseinrichtung SEE der aktiv operierenden Funkeinrichtung AFE keine aufwändige Übersetzung des Protokolls vor Weitergabe an die passiv operierenden Funkeinrichtungen PFE erforderlich, da die Datenübertragung ausschließlich gemäß RFID- bzw. NFC-Standards und Protokolle erfolgt. Wird hingegen ein anderer, von dem Mobiltelefon MS unterstützter Kommunikationsstandard, beispielsweise GSM, UMTS, WLAN etc., für die Funkkommunikation zwischen Schreib-/Lesegerät SLG und Mobiltelefon MS verwendet, so kommt der Sende-/Empfangseinrichtung SEE der aktiv operierenden Funkeinrichtung AFE ergänzend die Aufgabe zu, eine Wandlung der darin verwendeten Protokolle auf ein für die passiv operierenden Funkeinrichtungen PFE verständliches RFID- bzw. NFC-Protokoll durchzuführen. In diesem Fall verwenden sowohl Mobiltelefon MS als auch Schreib-/Lesegerät SLG speziell für den verwendeten Funkkommunikationsstandard ausgelegte Antenneneinrichtungen AE1 bzw. AE5.

Die Steuereinrichtung ST der aktiv operierenden Funkeinrichtung AFE führt Prozesse aus, beispielsweise eine Steuerung der Sende-/Empfangseinrichtung SEE, einen Zugriff auf die Speichereinrichtung SP, einen Zugriff bzw. eine Selektion von passiv operierenden Funkeinrichtungen PFE, eine Steuerung der Schnittstellen zu Einrichtungen des Mobiltelefons MS. Unter anderem steuert die Steuereinrichtung ST, ebenso wie die Steuereinrichtungen ST der passiv operierenden Funkeinrichtungen PFE, eine Ver- und Entschlüsselung der Datenübertragung auf der Funkschnittstelle zwischen der aktiv operierenden AFE und den passiv operierenden Funkeinrichtungen PFE. Hierzu werden vorzugsweise bekannte Verschlüsselungsverfahren, beispielsweise unter Verwendung privater und/oder öffentlicher Schlüssel, eingesetzt. Weitere Funktionen der Steuereinrichtung werden in nachfolgender Beschreibung eines beispielhaften Anwendungsfalls der erfindungsgemäßen Anordnung näher erläutert.

In der zumindest einen Speichereinrichtung SP der aktiv operierenden Funkeinrichtung AFE werden beispielsweise vordefinierte von der Steuereinrichtung ST durchzuführende Prozessschritte gespeichert. Auch kann die Speichereinrichtung SP zur Zwischenspeicherung von von dem Schreib-/Lesegerät SLG oder den passiv operierenden Funkeinrichtung PFE empfangenen Daten verwendet werden, bevor diese zu der jeweils anderen Einrichtung übertragen werden bzw. wieder gelöscht oder verworfen werden.

Das beispielhafte Schreib-/Lesegerät SLG auf der rechten Seite der FIG 2 weist neben den bereits beschriebenen Antenneneinrichtungen AE5, AE6 ebenfalls eine Sende-/Empfangseinrichtung SEE für die Funkkommunikation mit Funkeinrichtungen wie der aktiv und den passiv operierenden Funkeinrichtungen AFE, PFE in dem Mobiltelefon MS bzw. dem Mobiltelefon MS selbst, sowie eine Steuereinrichtung ST auf, welche unter anderem zu sendende bzw. empfangene Daten aufbereitet. Das Schreib-/Lesegerät SLG ist beispielsweise über eine Internet-Protokoll-basierte Schnittstelle IP mit einer zentralen Rechnereinheit verbunden, in welcher von Funkeinrichtungen empfangene Daten verwaltet bzw. zu diesen zu übertragende Daten generiert werden. Im Rahmen der Erfindung sei angenommen, dass es sich sowohl bei dem Schreib-/Lesegerät SLG als auch bei der dieser nachgeschalteten Infrastruktur um bekannte Systemkomponenten handelt.

Die Funktionsweise der vorstehend genannten Einrichtungen soll ergänzend anhand eines beispielhaften Anwendungsfalls erläutert werden. Es sei angenommen, dass ein Nutzer des in FIG 1 und 2 dargestellten Mobiltelefons MS mehrere passiv operierende Funkeinrichtungen PFE in dem Behältnis BH des Mobiltelefons MS verwahrt hat. Diese können beispielsweise auf Kredit- oder sonstige Bankkarten, einem Mitgliedsausweis eines Fußballklubs, einem Firmenausweis seines Arbeitgebers, einer Abonnementkarte seines bevorzugten Theaters, einer Jahreskarte des öffentlichen Personennahverkehrs seiner Heimatstadt, einer Gesundheitskarte etc. angeordnet sein. Es sei ferner angenommen, dass diese passiv operierenden Funkeinrichtungen PFE bekannte passive RFID-Etiketten sind, die entsprechend ihrer jeweiligen Funktion unterschiedliche Daten, beispielsweise persönliche Daten des Nutzers, vorhalten.

Beabsichtigt der Nutzer nun den Besuch seines bevorzugten Theaters, so nutzt er seine Abonnementkarte beispielsweise für die Zahlung des Eintrittspreises bzw. für die Freigabe einer automatischen Abbuchung des Eintrittspreises von einem Bankkonto, oder auch für die Reservierung eines bestimmten Sitzplatzes. Bei Annäherung seines Mobiltelefons MS, welches an der Gehäuseaußenseite mit einer RFID-Antenne AE2 versehen ist, an ein Lesegerät bzw. Schreib-/Lesegerät SLG der Theaterkasse, detektiert die Steuereinrichtung ST in der aktiv operierenden Funkeinrichtung AFE des Mobiltelefons MS einen Zugriffsversuch seitens des Lesegerätes SLG und steuert eine optische Ausgabe einer Meldung über diesen Zugriffsversuch auf dem Bildschirm des Mobiltelefons MS des Nutzers, in FIG 1 mit der ersten Zeile "RFID Zugriff !" beispielhaft dargestellt. Der Nutzer hat nun die Möglichkeit, über die alphanumerische Tastatur seines Mobiltelefons MS, gegebenenfalls gesteuert über Menüfunktionen, die Theater-Abonnementkarte auszuwählen, in FIG 1 mit der Zeile "Auswahl:__" beispielhaft dargestellt.

Die Kenntnis, welche Karte bzw. welche RFID-Etikette welcher Auswahl-Kennung zugeordnet ist, ist in der Speichereinrichtung SP der aktiv operierenden Funkeinrichtung AFE hinterlegt. Die Steuereinrichtung ST führt nach Eingabe der Kennung der gewünschten Karte durch den Nutzer einen Vergleich der eingegebenen Daten mit den gespeicherten Daten durch, und gibt bei Übereinstimmung die Übertragung von Zugriffssignalen an die RFID-Etiketten frei. Sodann generiert die Steuereinrichtung ST Befehlssignale, die über die Sende-/Empfangseinrichtung SEE sowie die RFID-Antenne AE3 in dem Behältnis BH ausgesendet werden. Mittels der Befehlssignale und einem vorstehend beschriebenen bekannten Verfahren zur Individualisierung bzw. Separierung wie beispielsweise SDMA, TDMA, FDMA und/oder CDMA, spricht die Steuereinrichtung ST eine oder mehrere RFID-Etiketten gezielt an, um deren Daten auszulesen. Alternativ kann die Steuereinrichtung ST jedoch auch zunächst alle passiven RFID-Etiketten ansprechen, um erst nach Empfang der als Reaktion darauf zurück übertragenen Daten die Daten der von dem Nutzer freigegebenen Abonnementkarte zu selektieren. Die Sende-/Empfangseinrichtung SEE induziert dabei über die Antenne AE3 ausreichend Energie, damit die zumindest eine angesprochene passive RFID-Etikette in ihrer Speichereinrichtung vorgehaltene Daten, gegebenenfalls nach zuvor erfolgter Bearbeitung gemäß den empfangenen und gespeicherten Befehlssignalen, verschlüsselt zu der RFID-Antenne AE3 zurück übertragen kann.

Nach Vorliegen der von der ausgewählten Abonnementkarte übertragenen Daten in der aktiv operierenden Funkeinrichtung AFE wird dem Nutzer wiederum über den Bildschirm des Mobiltelefons MS mitgeteilt, dass die potenziell an das Lesegerät zu übertragenden Daten in der Speichereinrichtung SP der aktiv operierenden Funkeinrichtung AFE vorgehalten werden, in FIG 1 mit der Zeile ,,Daten gelesen !" beispielhaft dargestellt. Gegebenenfalls wird als weiterer Sicherungsmechanismus der Nutzer aufgefordert, die Datenübertragung zu dem Lesegerät freizugeben, beispielsweise über die ergänzende Eingabe einer PIN-Nummer über die alphanumerische Tastatur des Mobiltelefons MS, in FIG 1 mit der Zeilenfolge ,,Freigabe? Eingabe PIN: " dargestellt. Nach Prüfung der Übereinstimmung der von dem Nutzer eingegebenen PIN-Nummer mit der in der Speichereinrichtung SP hinterlegten PIN-Nummer liest die Steuereinrichtung ST die zwischengespeicherten Daten der ausgewählten RFID-Etikette, d.h. der Abonnementkarte, aus der Speichereinrichtung SP aus über reicht diese an die Sende-/Empfangseinrichtung SEE zur Übertragung über die RFID-Antenne AE2 an der Außenseite des Gehäuses G zu dem Lesegerät LSG weiter.

Die Übertragung auf der Funkschnittstelle zu dem Lesegerät SLG erfolgt anschließend gemäß einem von dem Lesegerät SLG vorgegebenen Protokoll bzw. Kommunikationsstandard. Nach Empfang der Daten in dem Lesegerät SLG über die Antenneneinrichtung AE6 und Sende-/Empfangseinrichtung SEE werden diese in der Steuereinrichtung ST für eine Weitergabe an weitere Komponenten des Systems, beispielsweise einen zentralen Server des Theaters, in dem Kundendaten zentral verwaltet werden, weitergereicht. Ergänzend können die Daten beispielsweise auch über einen Bildschirm an dem Lesegerät SLG angezeigt werden, so dass der Nutzer die übertragenen Daten nochmals auf ihre Korrektheit prüfen kann.

In gleicher Weise kann eine umgekehrte Prozedur durchgeführt werden, wenn mittels eines Schreibgerätes Daten auf eine oder mehrere passive RFID-Etiketten in dem Behältnis des Mobiltelefons geschrieben werden sollen. Dabei kann der Nutzer wiederum auswählen, welche RFID-Etikette beschrieben werden soll und das Schreiben gegebenenfalls ergänzend mittels einer PIN-Nummern-Eingabe freigeben.

## Patentansprüche

1. Anordnung zur Datenübertragung, aufweisend
- zumindest ein geschlossenes Behältnis (BH), und
- zumindest eine aktiv operierende Funkeinrichtung (AFE), welche zumindest teilweise an einer Außenseite des Behältnisses (BH) angeordnet ist, und welche ausgestaltet ist zur Funkkommunikation mit zumindest einer in dem Behältnis (BH) angeordneten passiv operierenden Funkeinrichtung (PFE), zur Kommunikation mit zumindest einer außerhalb des geschlossenen Behältnisses (BH) angeordneten weiteren Einrichtung (z.B. SLG) sowie zur Steuerung einer Übertragung von in der zumindest einen passiv operierenden Funkeinrichtung (PFE) vorgehaltenen Daten zu der zumindest einen weiteren Einrichtung (z. B. SLG), **dadurch gekennzeichnet, dass** die zumindest eine aktiv operierende Funkeinrichtung (AFE) ausgestaltet ist zur Aussendung von Überlagerungssignalen in der Weise, dass entweder durch die zumindest eine passiv operierende Funkeinrichtung (PFE) ein Empfang von von der zumindest einen weiteren Einrichtung (z.B. SLG) kommenden Signalen oder durch die zumindest eine weitere Einrichtung (z.B. SLG) ein Empfang von von der zumindest einen passiv operierenden Funkeinrichtung (PFE) ausgesendeten Signalen verhindert ist, ohne jeweils den Empfang dieser jeweiligen kommenden beziehungsweise ausgesendeten Signale durch die zumindest eine aktiv operierende Funkeinrichtung (AFE) weitgehend zu stören.

2. Anordnung nach Anspruch 1, **dadurch gekennzeichnet, dass** die Antenneneinrichtung (AE) der zumindest einen aktiv operierenden Funkeinrichtung (AFE) ausgestallet ist zur Aussendung der Überlagerungssignale entweder in den Innenraum des Behältnisses (BH) oder in Richtung der zumindest einen weiteren Einrichtung (z.B. SLG) .

3. Anordnung nach Anspruch 1 oder 2, wobei
die zumindest eine aktiv operierende Funkeinrichtung (AFE) ausgestaltet ist zur funk- oder leitungsbasierten Übertragung der Daten zu der weiteren Einrichtung (z.B. SLG).

4. Anordnung nach Anspruch 3, wobei
die aktiv operierende Funkeinrichtung (AFE) ausgestaltet ist für einen funkbasierten Austausch von Informationen mit der zumindest einen passiv operierenden Funkeinrichtung (PFE) und der zumindest einen weiteren Einrichtung (z.B. SLG) unter Verwendung gleicher oder unterschiedlicher Kommunikationsprotokolle.

5. Anordnung nach einem vorstehenden Anspruch, wobei die zumindest eine aktiv operierende Funkeinrichtung (AFE) ausgestaltet ist zum Empfangen einer Autorisierung seitens eines Nutzers zur Weitergabe von in der zumindest einen passiv operierenden Funkeinrichtung (PFE) vorgehaltenen Daten vor einer Übertragung der Daten an die zumindest eine weitere Einrichtung (z.B. SLG).

6. Anordnung nach einem vorstehenden Anspruch, wobei die zumindest eine aktiv operierende Funkeinrichtung (AFE) ausgestaltet ist zur Funkeinrichtungs-individuellen oder Funkeinrichtungsgruppen-individuellen Adressierung der zumindest einen passiv operierenden Funkeinrichtung (PFE).

7. Anordnung nach einem vorstehenden Anspruch, wobei die zumindest eine aktiv operierende Einrichtung (AFE) ausgestaltet ist zum Empfangen von Daten von der zumindest einen weiteren Einrichtung (z.B. SLG).

8. Anordnung nach einem vorstehenden Anspruch, wobei die aktiv operierende Funkeinrichtung (AFE) eine gleiche oder unterschiedliche Antenneneinrichtungen (AE1/AE2; AE3/AE4) für die Kommunikation mit der zumindest einen passiven Funkeinrichtung (PFE) und der zumindest einen weiteren Einrichtung (z.B. SLG) aufweist.

9. Anordnung nach einem vorstehenden Anspruch, wobei das geschlossene Behältnis (BH) aus einem starren und/oder flexiblen Material besteht.

10. Anordnung nach einem vorstehenden Anspruch, wobei zumindest die Übertragung der Daten von der zumindest einen passiv operierenden Funkeinrichtung (PFE) zu der zumindest einen aktiv operierenden Funkeinrichtung (AFE) verschlüsselt erfolgt.

11. Aktiv operierende Funkeinrichtung (AFE) zur zumindest teilweisen Anordnung an einer Außenseite eines geschlossenen Behältnisses (BH; G), welche aufweist zumindest Mittel zur Funkkommunikation mit zumindest einer in dem Behältnis (BH; G) angeordneten passiv operierenden Funkeinrichtung (PFE), zur Kommunikation mit zumindest einer außerhalb des Gehäuses (G) angeordneten weiteren Einrichtung (z.B. SLG) sowie zur Steuerung einer Übertragung von in der zumindest einen passiv operierenden Funkeinrichtung (PFE) vorgehaltenen Daten zu der zumindest einen weiteren Einrichtung (z.B. SLG), **dadurch gekennzeichnet, dass** Mittel vorgesehen sind zur Aussendung von Überlagerungssignalen, durch die entweder durch die zumindest eine passiv operierende Funkeinrichtung (PFE) ein Empfang von von der zumindest einen weiteren Einrichtung (z.B. SLG) kommenden Signalen oder durch die zumindest eine weitere Einrichtung (z.B. SLG) ein Empfang von von der zumindest einen passiv operierenden Funkeinrichtung (PFE) ausgesendeten Signalen verhindert ist, ohne jeweils den Empfang dieser jeweiligen kommenden beziehungsweise ausgesendeten Signale durch die aktiv operierende Funkeinrichtung (AFE) weitgehend zu stören.

12. Aktiv operierende Funkeinrichtung (AFE) nach Anspruch 11, **dadurch gekennzeichnet, dass** die Mittel zur Aussendung der Überlagerungssignale geeignet sind zur Aussendung der Überlagerungssignale entweder in den Innenraum des Behältnisses (BH) oder in Richtung der zumindest einen weiteren Einrichtung (z.B. SLG).

13. Aktiv operierende Funkeinrichtung nach Anspruch 11 oder 12, welche
Mittel oder zumindest eine Schnittstelle zu Mitteln aufweist zur Ein- und/oder Ausgabe von Informationen gegenüber einem Nutzer.

14. Aktiv operierende Funkeinrichtung (AFE) nach einem vorstehenden Anspruch, **gekennzeichnet durch** eine Ausgestaltung, bei der zumindest die Übertragung der Daten von der zumindest einen passiven Funkeinrichtung (PFE) zu der zumindest einen aktiven Funkeinrichtung (AFE) verschlüsselt erfolgt

## Claims

1. Data transmission arrangement, comprising
- at least one closed container (BH) and
- at least one actively operating radio device (AFE), at least part of which is disposed on an exterior face of the container (BH) and which is embodied for wirelessly communicating with at least one passively operating radio device (PFE) disposed in the container (BH), for communicating with at least one further device (e.g. SLG) disposed outside of the closed container (BH), and for controlling a transmission of data provided in the at least one passively operating radio device (PFE) to the at least one further device (e.g. SLG),
**characterised in that** the at least one actively operating radio device (AFE) is embodied for transmitting overlay signals in such a manner that either a reception of signals coming from the at least one further device (e.g. SLG) is prevented by the at least one passively operating radio device (PFE) or a reception of signals transmitted by the at least one passively operating radio device (PFE) is prevented by the at least one further device (e.g. SLG), without disrupting to any great degree in each case the reception of said respective coming or transmitted signals by the at least one actively operating radio device (AFE).

2. Arrangement according to claim 1, **characterised in that** the antenna device (AE) of the at least one actively operating radio device (AFE) is embodied for transmitting the overlay signals either into the interior of the container (BH) or in the direction of the at least one further device (e.g. SLG).

3. Arrangement according to claim 2, wherein
the at least one actively operating radio device (AFE) is embodied for wireless- or line-based transmission of the data to the further device (e.g. SLG).

4. Arrangement according to claim 3, wherein
the actively operating radio device (AFE) is embodied for wireless-based exchange of information with the at least one passively operating radio device (PFE) and the at least one further device (e.g. SLG) using the same or different communication protocols.

5. Arrangement according to a preceding claim, wherein
the at least one actively operating radio device (AFE) is embodied for receiving an authorisation on the part of a user for passing on data provided in the at least one passively operating radio device (PFE) prior to a transmission of the data to the at least one further device (e.g. SLG).

6. Arrangement according to a preceding claim, wherein
the at least one actively operating radio device (AFE) is embodied for addressing the at least one passively operating radio device (PFE) on an individual radio device basis or on an individual radio device group basis.

7. Arrangement according to a preceding claim, wherein
the at least one actively operating device (AFE) is embodied for receiving data from the at least one further device (e.g. SLG).

8. Arrangement according to a preceding claim, wherein
the actively operating device (AFE) has an identical antenna device or different antenna devices (AE1/AE2; AE3/AE4) for communicating with the at least one passive radio device (PFE) and the at least one further device (e.g. SLG).

9. Arrangement according to a preceding claim, wherein
the closed container (BH) consists of a rigid and/or flexible material.

10. Arrangement according to a preceding claim, wherein
at least the data transmission from the at least one passively operating radio device (PFE) to the at least one actively operating radio device (AFE) is encrypted.

11. Actively operating radio device (AFE) embodied to be disposed at least in part on an exterior face of a closed container (BH; G), said radio device (AFE) having at least means for wirelessly communicating with at least one passively operating radio device (PFE) disposed in the container (BH; G), for communicating with at least one further device (e.g. SLG) disposed outside of the housing (G), and for controlling a transmission of data provided in the at least one passively operating radio device (PFE) to the at least one further device (e.g. SLG), **characterised in that** means are provided for transmitting overlay signals by means of which either a reception of signals coming from the at least one further device (e.g. SLG) is prevented by the at least one passively operating radio device (PFE) or a reception of signals transmitted by the at least one passively operating radio device (PFE) is prevented by the at least one further device (e.g. SLG), without disrupting to any great degree in each case the reception of said respective coming or transmitted signals by the actively operating radio device (AFE).

12. Actively operating radio device (AFE) according to claim 11, **characterised in that** the means for transmitting the overlay signals are suitable for transmitting the overlay signals either into the interior of the container (BH) or in the direction of the at least one further device (e.g. SLG).

13. Actively operating radio device (AFE) according to claim 11 or 12, which has means or at least an interface to means for inputting information by and/or outputting information to a user.

14. Actively operating radio device (AFE) according to a preceding claim, **characterised by** an embodiment in which at least the data transmission from the at least one passive radio device (PFE) to the at least one active radio device (AFE) is encrypted.

## Revendications

1. Agencement pour la transmission de données, présentant
- au moins un récipient (BH) fermé, et
- au moins un dispositif radio opérant de façon active (AFE), qui est disposé en moins en partie sur un côté extérieur du récipient (BH), et est conçu pour la communication radio avec au moins un dispositif radio opérant de façon passive (PFE) et disposé dans le récipient (BH), pour la communication avec au moins un autre dispositif (par exemple SLG) disposé à l'extérieur du récipient (BH) fermé et pour la commande d'une transmission de données tenues à dispositioin dans l'au moins un dispositif radio opérant de façon passive (PFE) vers l'au moins un autre dispositif (par exemple SLG), **caractérisé en ce que** l'au moins un dispositif radio opérant de façon active (AFE) est conçu pour l'émission de signaux de superposition en ce sens que soit une réception de signaux venant de l'au moins un autre dispositif (par exemple SLG) est empêchée par l'au moins un dispositif radio opérant de façon passive (PFE) soit une réception de signaux émis par l'au moins un dispositif radio opérant de façon passive (PFE) est empêchée par l'au moins un autre dispositif (par exemple SLG), sans perturber largement à chaque fois la réception de ces signaux respectifs arrivant ou partant par l'au moins un dispositif radio opérant de façon active (AFE).

2. Agencement selon la revendication 1,
**caractérisé en ce que** le dispositif d'antenne (AE) de l'au moins un dispositif radio opérant de façon active (AFE) est conçu pour l'émission des signaux de superposition soit dans l'espace intérieur du récipient (BH) soit en direction de l'au moins un autre dispositif (par exemple SLG).

3. Agencement selon la revendication 1 ou 2,
l'au moins un dispositif radio opérant de façon active (AFE) étant conçu pour la transmission par radio ou ligne des données à l'autre dispositif (par exemple SLG).

4. Agencement selon la revendication 3,
le dispositif radio opérant de façon active (AFE) étant conçu pour un échange par radio d'informations avec l'au moins un dispositif radio opérant de façon passive (PFE) et l'au moins un autre dispositif (par exemple SLG) en utilisant des protocoles de communication identiques ou différents.

5. Agencement selon une revendication précédente,
l'au moins un dispositif radio opérant de façon active (AFE) étant conçu pour recevoir une autorisation de la part d'un utilisateur pour la transmission de données tenues à disposition dans l'au moins un dispositif radio opérant de façon passive (PFE) avant une transmission des données à l'au moins un autre dispositif (par exemple SLG).

6. Agencement selon une revendication précédente,
l'au moins un dispositif radio opérant de façon active (AFE) étant conçu pour l'adressage individuel par dispositif radio ou individuel par groupe de dispositifs radio de l'au moins un dispositif radio opérant de façon passive (PFE).

7. Agencement selon une revendication précédente,
l'au moins un dispositif opérant de façon active (AFE) étant conçu pour la réception de données de l'au moins un autre dispositif (par exemple SLG).

8. Agencement selon une revendication précédente,
le dispositif radio opérant de façon active (AFE) présentant des dispositifs d'antenne identiques ou différents (AE1/AE2 ; AE3/AE4) pour la communication avec l'au moins un dispositif radio passif (PFE) et l'au moins un autre dispositif (par exemple SLG).

9. Agencement selon une revendication précédente,
le récipient fermé (BH) étant à base d'un matériau rigide et/ou flexible.

10. Agencement selon une revendication précédente,
au moins la transmission des données de l'au moins un dispositif radio opérant de façon passive (PFE) à l'au moins un dispositif radio opérant de façon active (AFE) s'effectuant de façon codée.

11. Dispositif radio opérant de façon active (AFE) pour la mise en place au moins partielle sur un côté extérieur d'un récipient fermé (BH ; G), qui présente au moins des moyens pour la communication radio avec au moins un dispositif radio opérant de façon passive (PFE) disposé dans le récipient (BH ; G), pour la communication avec au moins un autre dispositif (par exemple SLG) disposé à l'extérieur du boîtier (G) et pour la commande d'une transmission de données tenues à disposition dans l'au moins un dispositif radio opérant de façon passive (PFE) à l'au moins un autre dispositif (par exemple SLG), **caractérisé en ce que** des moyens sont prévus pour l'émission de signaux de superposition, par lesquels soit une réception de signaux arrivant de l'au moins un autre dispositif (par exemple SLG) est empêchée par l'au moins un dispositif radio opérant de façon passive (PFE) soit une réception de signaux émis par l'au moins un dispositif radio opérant de façon passive (PFE) est empêchée par l'au moins un autre dispositif (par exemple SLG), sans gêner largement à chaque fois la réception de ces signaux respectifs arrivant ou partant par le dispositif radio opérant de façon active (AFE).

12. Dispositif radio opérant de façon active (AFE) selon la revendication 11,
**caractérisé en ce que** les moyens pour l'émission des signaux de transmission sont appropriés pour l'émission des signaux de superposition soit dans l'espace intérieur du récipient (BH) soit en direction de l'au moins un autre dispositif (par exemple SLG).

13. Dispositif radio opérant de façon active selon la revendication 11 ou 12,
qui présente des moyens ou au moins une interface avec des moyens pour l'entrée et/ou la sortie d'informations par rapport à un utilisateur.

14. Dispositif radio opérant de façon active (AFE) selon une revendication précédente, **caractérisé par** une conception dans laquelle au moins la transmission des données de l'au moins un dispositif radio passif (PFE) à l'au moins un dispositif radio actif (AFE) s'effectue de façon codée.
